# EUROPÄISCHE PATENTSCHRIFT

(11) **EP 1 911 562 B1**
(45) Veröffentlichungstag und Bekanntmachung des Hinweises auf die Patenterteilung: **12.12.2012**
(21) Anmeldenummer: 07019740.5
(22) Anmeldetag: 09.10.2007
(51) Int. Cl.: B29C 45/16, B65D 1/24, B65D 85/30

(54) **Kunststoffbehälter, insbesondere Flaschenkasten**
Plastic container, in particular a bottle crate
Récipient en matière synthétique, en particulier caisse à bouteilles

(30) Priorität: 09.10.2006 DE 202006015438 U
(43) Veröffentlichungstag der Anmeldung: 16.04.2008
(73) Patentinhaber: Schoeller Arca Systems GmbH, 19057 Schwerin (DE)
(72) Erfinder: Oster, Heinz, 82319 Starnberg (DE); Lenz, Thorsten, 14055 Berlin (DE)
(74) Vertreter: Bockhorni & Kollegen

(56) Entgegenhaltungen:
- EP-A- 0 271 984
- DE-A1- 10 239 319
- DE-A1-102004 050 258
- GB-A- 2 266 071
- JP-A- 1 247 124
- JP-A- 59 185 640
- US-A1- 2006 198 921

## Beschreibung

Die bislang in der Regel aus einem Kunststoff durch Spritzgießen hergestellten Kunststoffbehälter werden aus Gründen des Designs und Tragekomforts immer mehr in bestimmten Bereichen, beispielsweise im Bereich des Griffes mit einem zweiten Kunststoff versehen, der entweder farblich abgesetzt oder zur Verbesserung des Tragekomforts weich und dgl. eingestellt werden kann. Dadurch ergeben sich neue Gestaltungsmöglichkeiten für das Design eines Behälters. Hierbei ist es bekannt (DE 102 39 319 A1) zur genauen Abgrenzung zwischen dem Bereich des ersten und des zweiten Kunststoffs eine Dichtleiste vorzusehen, die entweder als hervorstehende Dichtlippe oder als in den ersten Kunststoff eingeformte Nut ausgebildet ist. Mit diesen Maßnahmen ist eine saubere Abgrenzung zwischen dem Bereich des ersten und zweiten Kunststoffs gegeben, was für das Aussehen des Behälters sehr wesentlich ist und was im Übrigen auch letztendlich die Zykluszeiten erhöht, da nicht zusätzliche gesonderte Maßnahmen für einen einwandfreien Übergang zu treffen sind. Eine vergleichbare Dichtleistenausbildung ist aus der DE 10 2004 050 258 A 1 bekannt.

Aufgabe der Erfindung ist es, einen solchen Flaschenkasten weiterzuentwickeln, dergestalt, dass die Herstellung derartiger Kästen weiter vereinfacht und auch bei schnellsten Zykluszeiten eine klare und trennscharfe Abgrenzung zwischen den beiden Kunststoffbereichen gewährleistet wird.

Diese Aufgabe wird für ein Verfahren erfindungsgemäß durch die im kennzeichnenden Teil des Anspruches 1 enthaltenen Merkmale und für einen Flaschenkasten durch die Merkmale in den nebengeordneten Ansprüchen 9 und 10 gelöst, wobei zweckmäßige Weiterbildungen für Verfahren und Flaschenkasten durch die in den Unteransprüchen enthaltenen Merkmale gekennzeichnet sind.

Nach Maßgabe der Erfindung wird die Dichtleiste so ausgelegt, dass sie als Quetschleiste wirkt. Dies hat zur Folge, dass beim Ansetzen des Formwerkzeugs für das Anspritzen eines weiteren Kunststoffs infolge Kontakts des Formwerkzeugs mit der Quetschleiste eine Deformation im Ansetzbereich des Formwerkzeugs gegenüber der Quetschleiste stattfindet, die somit entsprechend leicht deformiert wird, so dass sich eine geschlossene Kammerung des Aufnahmeraums für den zweiten Kunststoff im Übergangsbereich, die jegliches Übertreten des zweiten Kunststoffs aus dem vorbestimmten Bereich verhindert, so dass sich eine trennscharfe Abgrenzung zwischen den beiden Kunststoffbereichen ergibt.

In einer zweckmäßigen Ausbildung der Erfindung wird die Quetschleiste durch Separieren der Dichtleiste vom übrigen Bereich des ersten Kunststoffs durch eine eingearbeitete Nut gebildet, so dass der Quetschvorgang beim Ansetzen des Formwerkzeugs auf die Quetschleiste begrenzt ist, die im Übrigen in einer vorteilhaften Ausführung leicht gegenüber der übrigen Fläche des Kunststoffs vorsteht.

In weiterer Ausbildung ist die Quetschleiste im Nutgrund einer im Übergangsbereich zwischen dem ersten und dem zweiten Kunststoff vorgesehenen Nut ausgebildet und steht über den Nutgrund nach oben vor und bildet damit eine definierte Ansetzfläche für das Formwerkzeug zum Abschluss des Aufnahmeraums für den zweiten anzuspritzenden Kunststoff. In einer weiteren Ausführungsform kann die Quetschleiste in einer Ausnehmung vorgesehen sein, die zur Aufnahme des zweiten Kunststoffs dient. Die Quetschleiste dient hierbei wieder als Ansetzpunkt für das Formwerkzeug und wird durch das angesetzte Formwerkzeug leicht deformiert, so dass sich wiederum eine trennscharfe Abgrenzung zwischen den beiden Kunststoffbereichen über die Quetschleiste ergibt.

Die Höhe der Quetschleiste liegt im Bereich von 0,2 bis 3 mm, vorzugsweise 0,3 bis 1,5 mm und zwar insbesondere bevorzugt im Bereich von 0,3 bis 0,8 mm. Insbesondere bei einer kleiner ausgeführten Quetschleiste, wie etwa im Falle von Flaschenkästen üblicher Baugröße, also bei einer Höhe von etwa 0,3 bis 1,5 mm ist zur Vereinfachung der Herstellung die Quetschleiste mit im Wesentlichen rechteckförmigem oder quadratischem Querschnitt ausgebildet. Im Falle einer höheren Quetschleiste, wie sie insbesondere für Großbehälter oder etwa Paletten und dgl. verwendet wird, weist die Quetschleiste zweckmäßigerweise eine zumindest im oberen Bereich der Leiste sich verjüngenden Querschnitt auf, um die Deformation durch das angesetzte Formwerkzeug zu erleichtern, die für die Bildung der trennscharfen Abgrenzung wesentlich ist.

Soweit in der Beschreibung auf einen Sicht- und Dekorbereich Bezug genommen wird, so ist darunter zu verstehen, dass die Quetschleiste im Übergangsbereich zwischen den beiden Kunststoffen im Wesentlichen zumindest dort vorgesehen wird, wo eine nicht einwandfreie Übergangsfläche zwischen den beiden Kunststoffbereichen störend wirkt, also in der Regel im Sicht- und Dekorbereich. Selbstverständlich kann bei Bedarf ohne weiteres die Dichtleiste bzw. die Quetschleiste auch den gesamten Bereich zwischen ersten und zweiten Kunststoff abgrenzen und ist dann insgesamt umlaufend ausgebildet.

Nachfolgend werden Ausführungsbeispiele der Erfindung anhand der Zeichnung beschrieben. Diese zeigen in
- Fig. 1: eine schematische Teilansicht eines Konturbereichs eines Flaschenkastens zur Darstellung einer Ausführungsform,
- Fig. 2: eine schematische Ansicht einer weiteren Ausführungsform entsprechend der Darstellung in Fig. 1 sowie
- Fig. 3: eine weitere wiederum rein schematische Ansicht des Konturbereichs einer weiteren Ausführungsform.

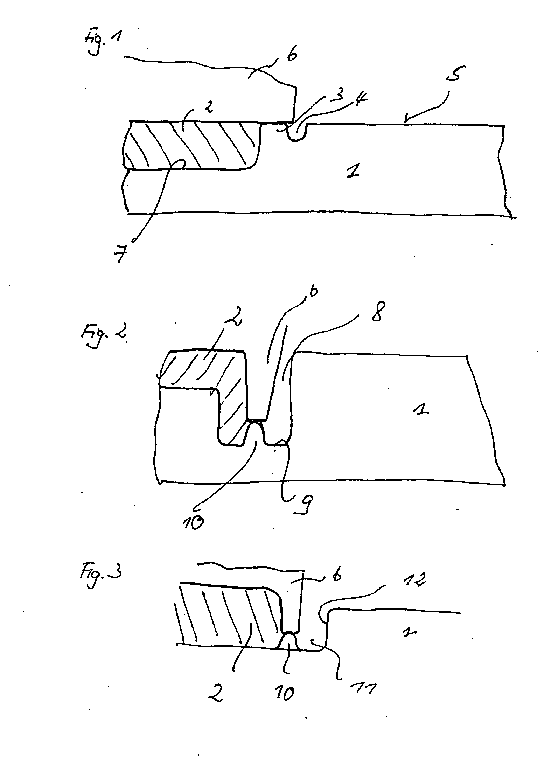

Fig. 1 zeigt einen Querschnitt eines Teils eines Flaschenkastens, hier beispielsweise im Griffbereich, wobei mit 1 der erste Kunststoff bezeichnet ist, der in einem ersten Spritzgussvorgang sozusagen das Grundgerüst bzw. den Grundkasten darstellt, auf den dann der mit 2 bezeichnete zweite Kunststoff angespritzt wird. Im Grenzbereich zwischen dem ersten und dem zweiten Kunststoff 1, 2 ist eine Dichtleiste 3 ausgebildet, die zur Abgrenzung zwischen dem ersten und dem zweiten Kunststoff dient. Die Dichtleiste 3 ist auf der dem zweiten Kunststoff 2 abgewandten Seite von einer mit 4 bezeichneten Nut begrenzt, welche die Dichtleiste 3 sozusagen vom übrigen Wandabschnitt des Kastens bzw. der Sichtoberfläche 5 trennt, bei der es sich um die Außenfläche des Kastens im Griffbereich handelt. Die Nut 4 ist hierbei so nahe an der Dichtleiste 3 angeordnet bzw. ausgebildet und zwar durch Einformung in die Außenfläche des ersten Kunststoffs 1, so dass die Dichtleiste 3 als schmale Leiste und damit als Quetschleiste ausgebildet ist. Die Quetschleiste 3 steht hierbei leicht über die Außenfläche 5 vor, ist jedoch beim angesetzten Formwerkzeug 6, welches hier nur rein schematisch und teilweise dargestellt ist, auf eine Höhe gequetscht, die im dargestellten Ausführungsbeispiel bündig mit der Außenfläche 5 ist. Auch der Bereich des Formwerkzeugs 6, der die Ausnehmung 7 für die Aufnahme des zweiten Kunststoffs 2 überdeckt und im Wesentlichen bündig mit der Außenfläche 5 ausgerichtet ist, ergibt sich nach Einspritzen des Kunststoffs 2 auch für diesen eine im Wesentlichen mit der Fläche 5 bündige Außenfläche. Im dargestellten Ausführungsbeispiel ist der zweite Kunststoff weich ausgebildet gegenüber dem ersten Kunststoff, so dass durch den angespritzten zweiten Kunststoff 2 ein sehr guter Tragekomfort für den Griff des Kastens erzielt wird. Im Falle eines Flaschenkastens üblicher Bauart, also etwa zur Aufnahme von ca. 24 Flaschen, beträgt im dargestellten Ausführungsbeispiel die Höhe der Quetschleiste ab Basis der Ausnehmung 7, etwa 2 mm bei einer Tiefe der angrenzenden Nut von 0,6 mm und eine Breite der Dichtleisten von 1,12 mm, wobei diese Aufgaben beispielhaft sind.

Bei der Ausführungsform nach Fig. 2, bei der wiederum das Formwerkzeug 6 nur rein schematisch dargestellt ist, ist im Übergangsbereich zwischen dem ersten und dem zweiten Kunststoff 1, 2 in den ersten Kunststoff eine Nut 8 eingearbeitet, an deren Nutgrund 9 die Quetschleiste 10 angeordnet ist. Die Quetschleiste 10 erstreckt sich hierbei aus dem Nutgrund 9 nach oben. Im Ausführungsbeispiel nach Fig. 2 ist anders als bei Fig. 1, in der die Quetschleiste 3 mit im Wesentlichen rechteckförmigen Querschnitt ausgebildet ist, die Quetschleiste 10 wulstartig ausgebildet, d. h. mit einem sich nach oben hin verjüngenden Querschnitt. Für die Anformung des zweiten Kunststoffs wird das Werkzeug 6 in Anlage an das obere Ende der Quetschleiste 10 gesetzt und drückt die Quetschleiste 10 etwas ein, so dass ein einwandfreier Trennabschluss zwischen dem linken und dem rechten Bereich in Höhe der Quetschleiste 10 gewährleistet ist. Wird der zweite Kunststoff 2 eingespritzt, dann ergibt sich infolge der Quetschleiste 10 in Zusammenwirkung mit dem Formwerkzeug 6 eine exakte trennscharfe Abgrenzung der beiden Kunststoffbereiche, was insbesondere für das ästhetische Erscheinungsbild außerordentlich wesentlich ist.

Im Ausführungsbeispiel nach Fig. 3 ist die in etwa entsprechend der Fig. 2 ausgebildete Quetschleiste 10 in einer Ausnehmung 11 des ersten Kunststoffs 1 ausgebildet und zwar benachbart einer mit 12 bezeichneten Schulter des ersten Kunststoffs 1, wobei die Aufnahme 11 zur Aufnahme des zweiten Kunststoffs 2 dient. Auch hier ist das mit 6 bezeichnete Formwerkzeug auf die Quetschleiste 10 zugestellt und drückt diese etwas zusammen, so dass sich wiederum eine trennscharfe Kammerung des mit dem Kunststoff 2 gefüllten Bereichs und damit eine trennscharfe Abgrenzung zwischen den beiden Kunststoffen im Übergangsbereich ergibt.

Die Höhe der Quetschleiste ist natürlich von den Abmessungen des Kunststoffbehälters abhängig und liegt im Bereich von 0,2 bis etwa 3 mm. Insbesondere bei größeren Kunststoffbehältern, wie etwa einer Palette, die hier selbstverständlich auch unter den Begriff Kunststoffbehälter fällt, beträgt die Höhe der Quetschleiste etwa 0,7 bis 3 mm. Bei Flaschenkästen üblicher Baugröße beträgt die Höhe der Quetschleiste bevorzugt 0,3 bis 1,5 mm, insbesondere bevorzugt 0,3 bis 0,8 mm. Jedenfalls werden die Abmessungen der Quetschleiste so gewählt, dass es beim Ansetzen des Formwerkzeugs zu einer leichten Deformierung zwecks Erzielung einer trennscharfen Abgrenzung, insbesondere trennscharfen Kammerung des Aufnahmeraums für den zweiten Kunststoff kommt und damit jegliches Überströmen ausgeschlossen ist.

## Patentansprüche

1. Spritzgießverfahren mit einem Spritzgußwerkzeug zur Fertigung eines Flaschenkastens, mit einem Boden und Kastenwänden, welche mindestens aus einem ersten Kunststoff gebildet werden, wobei in einem ersten Spritzvorgang ein Grundkasten aus dem ersten Kunststoff gebildet wird, auf den am Boden und/oder an den Kastenwänden mindestens ein Bereich aus einem zweiten Kunststoff durch Auf- oder Anspritzen stoffschlüssig mit dem ersten Kunststoff verbunden wird, und zwar in einem Bereich (5), der durch eine am ersten Kunststoff ausgebildeten Dichtleiste in Art einer Dichtlippe oder einer in den ersten Kunststoff hineinragenden Dichtnut gebildet ist, **dadurch gekennzeichnet, dass** die Dichtleiste insbesondere im Sicht- und Dekorbereich des mindestens zweiten Kunststoffs (2) als bereichsumlaufende Quetschleiste (3, 10) für den Kontakt mit dem für den Auf bzw. Anspritzvorgang des zweiten Kunststoffs (2) an den ersten Kunststoff (1) angesetzten Formwerkzeugs (6) ausgebildet ist, so dass beim Ansetzen des Formwerkzeugs für das Anspritzen des zweiten Kunststoffs eine Deformation der Quetschleiste aus dem ersten Kunststoffes im Ansetzbereich stattfindet, derart, dass sich eine geschlossene Kammerung des Aufnahmeraums für den zweiten Kunststoff im Übergangsbereich für eine trennscharfe Abgrenzung zwischen den beiden Kunststoffbereichen ergibt.

2. Verfahren nach Anspruch 1, **dadurch gekennzeichnet, dass** die Quetschleiste (3) auf ihrer dem Bereich des zweiten Kunststoffs (2) abgewandten Seite von einer längs der Dichtleiste verlaufenden Nut (4) begrenzt wird, die in die Oberfläche (5) des ersten Kunststoffs (1) eingeformt ist.

3. Verfahren nach Anspruch 1, **dadurch gekennzeichnet, dass** die Quetschleiste (10) im Nutgrund einer im Grenzbereich zwischen dem ersten und zweiten Kunststoff (1, 2) vorgesehenen Nut (8) ausgebildet ist und als Ansetzfläche für das Formwerkzeug (6) für das Auf- bzw. Anspritzen des zweiten Kunststoffs (2) verwendet wird.

4. Verfahren nach Anspruch 1, **dadurch gekennzeichnet, dass** die Quetschleiste (10) in einer von einer Randschulter (12) des ersten Kunststoffs (1) begrenzten Ausnehmung (11) für die Aufnahme des zweiten Kunststoffs (2) vorgesehen wird.

5. Verfahren nach einem der vorhergehenden Ansprüche, **dadurch gekennzeichnet, dass** die Quetschleiste (3, 10) einen rechteckförmigen, insbesondere quadratischen Querschnitt aufweist.

6. Verfahren nach einem der Ansprüche 1 bis 4, **dadurch gekennzeichnet, dass** die Quetschleiste (3, 10) einen insbesondere im oberen Bereich sich verjüngenden Querschnitt aufweist.

7. Verfahren nach einem der vorhergehenden Ansprüche, **dadurch gekennzeichnet, dass** die Quetschleiste (3, 10) eine Höhe im Bereich zwischen 0,2 bis 3 mm, vorzugsweise 0,3 bis 1,5 mm, insbesondere bevorzugt 0,3 bis 0,8 mm aufweist.

8. Verfahren nach Anspruch 2, **dadurch gekennzeichnet, dass** die Nuttiefe der Nut (4) 0,2 bis 0,8 mm, insbesondere 0,4 bis 0,6 mm beträgt.

9. Flaschenkasten, mit einem Boden und Kastenwänden, hergestellt nach einem Verfahren nach einem der vorhergehenden Ansprüche, welcher mindestens aus einem ersten Kunststoff gebildet ist, wobei an dem Boden und/oder den Kastenwänden mindestens ein Bereich aus einem zweiten Kunststoff durch Auf- oder Anspritzen auf den ersten Kunststoff stoffschlüssig mit diesem Kunststoff verbunden ist, und zwar in einem Bereich (5), der durch eine Dichtleiste in Art einer Dichtlippe oder einer in den ersten Kunststoff hineinragenden Dichtnut gebildet ist, wobei die
Dichtleiste insbesondere im Sicht- und Dekorbereich des mindestens zweiten Kunststoffs (2) als bereichsumlaufende Quetschleiste (3, 10) am ersten Kunststoff (1) ausgebildet ist, derart, dass die Quetschleiste beim Ansetzen eines Formwerkzeugs deformierbar ist und die Quetschleiste eine trennscharfe Abgrenzung des Übergangs vom ersten zum zweiten Kunststoff (1, 2) bildet, **dadurch gekennzeichnet, dass** die Quetschleiste (10) im Nutgrund einer im Grenzbereich zwischen dem ersten und zweiten Kunststoff (1, 2) vorgesehenen Nut (8) ausgebildet ist und als Ansetzfläche für das Formwerkzeug (6) für das Auf- bzw. Anspritzen des zweiten Kunststoffs (2) verwendet wird.

10. Flaschenkasten, mit einem Boden und Kastenwänden, hergestellt nach einem Verfahren nach einem der Ansprüche 1 bis 8, welcher mindestens aus einem ersten Kunststoff gebildet ist, wobei an dem Boden und/oder den Kastenwänden mindestens ein Bereich aus einem zweiten Kunststoff durch Auf- oder Anspritzen auf den ersten Kunststoff stoffschlüssig mit diesem Kunststoff verbunden ist, und zwar in einem Bereich (5), der durch eine Dichtleiste in Art einer Dichtlippe oder einer in den ersten Kunststoff hineinragenden Dichtnut gebildet ist, wobei die Dichtleiste insbesondere im Sicht- und Dekorbereich des mindestens zweiten Kunststoffs (2) als bereichsumlaufende Quetschleiste (3, 10) am ersten Kunststoff (1) ausgebildet ist, derart, dass die Quetschleiste beim Ansetzen eines Formwerkzeugs deformierbar ist und die Quetschleiste eine trennscharfe Abgrenzung des Übergangs vom ersten zum zweiten Kunststoff (1, 2) bildet, **dadurch gekennzeichnet, dass** die Quetschleiste (10) in einer von einer Randschulter (12) des ersten Kunststoffs (1) begrenzten Ausnehmung (11) für die Aufnahme des zweiten Kunststoffs (2) vorgesehen wird.

11. Flaschenkasten nach Anspruch 9 oder 10, **dadurch gekennzeichnet, dass** die Quetschleiste (3, 10) einen rechteckförmigen, insbesondere quadratischen Querschnitt aufweist.

12. Flaschenkasten nach einem der Ansprüche 9 bis 11, **dadurch gekennzeichnet, dass** die Quetschleiste (3, 10) einen insbesondere im oberen Bereich sich verjüngenden Querschnitt aufweist.

13. Flaschenkasten nach einem der Ansprüche 9 bis 12, **dadurch gekennzeichnet, dass** die Quetschleiste (3, 10) eine Höhe im Bereich zwischen 0,2 bis 3 mm, vorzugsweise 0,3 bis 1,5 mm, insbesondere bevorzugt 0,3 bis 0,8 mm aufweist.

14. Flaschenkasten nach Anspruch 9, **dadurch gekennzeichnet, dass** die Nuttiefe der Nut (4) 0,2 bis 0,8 mm, insbesondere 0,4 bis 0,6 mm beträgt.

## Claims

1. Injection molding technique with a molding tool for the manufacturing of a bottle crate, including bottom and crate walls, which are formed at least from a first plastic matter, wherein during a first injection a basis crate is formed from the first plastic matter, upon the bottom and/or walls of which at least one area made from a second plastic matter is firmly bonded to the first plastic matter through injection on or at, namely in an area (5) which, through a sealing strip formed on the first plastic matter, takes the form of a sealing lip or sealing groove advancing within the first plastic matter, **characterized in that** the sealing strip, particularly in the sight and décor area of at least the second plastic matter (2), is formed as a crush strip (3, 10) extending around the area for the contact with the molding tool (6) set on the first plastic matter (1) for the injection process of the second plastic matter (2), so that during the contacting of the molding tool for the injection of the second plastic matter, a deformation of the crush strip from the first plastic matter takes place in the contact area, in such a fashion that a sealed chambering of the absorption room for the second plastic matter is formed in the transient area for a sharp distinction of both plastic matter areas.

2. Process according to claim 1, **characterized in that** the crush strip (3), on its side facing away from the second plastic matter (2), is delimited by a groove along the sealing strip (4) which is formed in the surface (5) of the first plastic matter (1).

3. Process according to claim 1, **characterized in that** the crush strip (10) is formed in the base of a groove (8) made in the border area between the first and the second plastic matter (1, 2) and is used as an insertion area for the molding tool (6) for the spraying and splashing of the second plastic matter (2).

4. Process according to claim 1, **characterized in that** the crush strip (10) is provided in a recess (11) delimited by a peripheral rim (12) of the first plastic matter (1) for the intake of the second plastic matter (2).

5. Process according to any of the preceding claims, **characterized in that** the crush strip (3, 10) is right angled or, more particularly, square formed.

6. Process according to any one of the claims 1 to 4, **characterized in that** the crush strip (3, 10) has a cross section which is particularly narrow in the upper area.

7. Process according to any of the preceding claims, **characterized in that** the crush strip (3, 10) have a height ranging from 0,2 to 3 mm, preferably between 0,3 and 1,5 mm, and even better, between 0,3 and 0,8 mm.

8. Process according to claim 2, **characterized in that** the depth of the groove (4) ranges between 0,2 and 0,8 mm, particularly between 0,4 and 0,6 mm.

9. Bottle crate, with floor and crate walls, manufactured according to a process according to any of the preceding claims, which is at least formed from a first plastic matter, upon the floor and/or walls of which at least one area made from a second plastic matter is firmly bonded to the first plastic matter through spraying or splashing, namely in an area (5) which, through a sealing strip, takes the form of a sealing lip or sealing groove advancing within the first plastic matter, wherein the sealing strip, particularly in the sight and décor area of at least the second plastic matter (2), is formed as a crush strip (3, 10) circulating around the area on the first plastic matter (1), so as to allow the deformation of the crush strip during the insertion of the molding tool and so that the crush strip creates a clear delimitation of the transition from the first to the second plastic matter (1, 2), **characterized in that** the crush strip (10) is formed in the base of a groove (8) made in the border area between the first and the second plastic matter (1, 2) and is used as an insertion area for the molding tool (6) for the spraying and splashing of the second plastic matter (2).

10. Bottle crate, with floor and crate walls, manufactured according to a process according to claims 1 to 8, which is at least formed from a first plastic matter, upon the floor and/or walls of which at least one area made from a second plastic matter is firmly bonded to the first plastic matter through spraying or splashing, namely in an area (5) which, through a sealing strip, takes the form of a sealing lip or sealing groove advancing within the first plastic matter, wherein the sealing strip, particularly in the sight and décor area of at least the second plastic matter (2), is formed as a crush strip (3, 10) circulating around the area on the first plastic matter (1), so as to allow the deformation of the crush strip during the insertion of the molding tool and so that the crush strip creates a clear delimitation of the transition from the first to the second plastic matter (1, 2), **characterized in that** the crush strip (10) is provided in a recess (11) delimited by a peripheral rim (12) of the first plastic matter (1) for the intake of the second plastic matter (2).

11. Bottle crate according to claim 9 or 10, **characterized in that** the crush strip (3, 10) is right angled or, more particularly, square formed.

12. Bottle crate according to claims 9 to 11, **characterized in that** the crush strip (3, 10) has a cross section which is particularly narrow in the upper area.

13. Bottle crate according to claims 9 to 12, **characterized in that** the crush strip (3, 10) have a height ranging from 0,2 to 3 mm, preferably between 0,3 and 1,5 mm, and even better, between 0,3 and 0,8 mm.

14. Bottle crate according to claim 9, **characterized in that** the depth of the groove (4) ranges between 0,2 and 0,8 mm, particularly between 0,4 and 0,6 mm.

## Revendications

1. Procédé de moulage par injection avec un outil de moulage par injection pour la fabrication d'une boîte de bouteilles comprenant un plancher et des parois, lesquels sont au moins composés d'un premier plastique, une première injection formant à partir du premier plastique une boîte de base, sur le plancher et/ou les parois de laquelle au moins une zone, composée d'un deuxième plastique, est fermement liée par projection ou pulvérisation au premier plastique, et ce dans une zone (5) qui, au moyen de la bande d'étanchéité formée dans le premier plastique, prend la forme d'une lèvre d'étanchéité ou d'une rainure d'étanchéité qui avance dans le premier plastique, **caractérisé en ce que** la bande d'étanchéité, en particulier dans la zone de vision et de décor au moins du deuxième plastique (2), est formée en une bande d'écrasement (3, 10) qui circule autour de la zone pour le contact avec l'outil de moulage (6) installé sur le premier plastique (1) en vue du procédé de projection ou de pulvérisation du deuxième plastique (2), de façon à ce que la disposition de l'outil de moulage pour la pulvérisation du deuxième plastique entraîne dans la zone d'insertion une déformation de la bande d'écrasement à partir du premier plastique, de telle façon que se forme dans la zone de transition un compartiment isolé de la zone d'injection pour le deuxième plastique en vue d'une distinction claire entre les deux zones de plastique.

2. Procédé selon la revendication 1, **caractérisé en ce que** la bande d'écrasement (3) est délimitée, sur sa parois opposée à la zone du deuxième plastique (2), par une rainure (4) qui circule le long de la bande d'étanchéité et qui est formée dans la surface (5) du premier plastique (1).

3. Procédé selon la revendication 1, **caractérisé en ce que** la bande d'écrasement (10) est formée dans la base de rainure d'une rainure (8) pratiquée dans la zone limite entre le premier et le deuxième plastique (1, 2) puis utilisée comme surface d'insertion pour l'outil de moulage (6) en vue de la projection ou pulvérisation du deuxième plastique (2).

4. Procédé selon la revendication 1, **caractérisé en ce que** la bande d'écrasement (10) est disposée dans une exclusion (11) délimitée par un rebord périmètral (12) du premier plastique (1) pour la préhension du deuxième plastique (2).

5. Procédé selon l'une des revendications précédentes, **caractérisé en ce que** la bande d'écrasement (3, 10) présente une coupe transversale à angles droits, ou plus particulièrement de forme carrée.

6. Procédé selon l'une des revendications 1 à 4, **caractérisé en ce que** la bande d'écrasement (3, 10) présente une coupe transversale qui va en se rétrécissant, en particulier dans la zone supérieure.

7. Procédé selon l'une des revendications précédentes, **caractérisé en ce que** la bande d'écrasement (3, 10) a une hauteur entre 0,2 et 3 mm, de préférence entre 0,3 et 1,5 mm, où une hauteur située entre 0,3 et 0,8 mm est particulièrement favorisée.

8. Procédé selon la revendication 2, **caractérisé en ce que** la profondeur de la rainure (4) est de 0,2 à 0,8 mm, ou plus particulièrement de 0,4 à 0,6 mm.

9. Boîte de bouteilles avec plancher et parois fabriquée selon un procédé selon l'une des revendications précédentes et formée au moins d'un premier plastique, sur le plancher et/ou les parois de laquelle au moins une zone, composée d'un deuxième plastique, est fermement liée par projection ou pulvérisation au premier plastique, et ce dans une zone (5) qui, au moyen de la bande d'étanchéité, prend la forme d'une lèvre d'étanchéité ou d'une rainure d'étanchéité qui avance dans le premier plastique, la bande d'étanchéité, en particulier dans la zone de vision et de décor au moins du deuxième plastique (2), étant formée en une bande d'écrasement (3, 10) qui circule autour de la zone installée sur le premier plastique (1) de telle façon que la bande d'écrasement soit déformable lors de l'intégration de l'outil de moulage et que la bande d'écrasement forme une délimitation claire de l'intersection entre le premier et le deuxième plastique (1, 2), **caractérisée en ce que** la bande d'écrasement (10) est formée dans la base d'une rainure (8) pratiquée dans une zone limite entre le premier et le deuxième plastique (1, 2) et est utilisée comme surface d'insertion pour l'outil de moulage (6) en vue de la projection ou pulvérisation du deuxième plastique (2).

10. Boîte de bouteilles avec plancher et parois fabriquée selon un procédé selon l'une des revendications 1 à 8 et formée d'au moins un premier plastique, sur le plancher et/ou les parois de laquelle au moins une zone, composée d'un deuxième plastique, est fermement liée par projection ou pulvérisation au premier plastique, et ce dans une zone (5) créée par une bande d'étanchéité formée sur le premier plastique sous la forme d'une lèvre d'étanchéité ou d'une rainure d'étanchéité qui avance dans le premier plastique, la bande d'étanchéité, en particulier dans la zone de vision et de décor au moins du deuxième plastique (2), étant formée en une bande d'écrasement (3, 10) qui circule autour de la zone installée sur le premier plastique (1) de telle façon que la bande d'écrasement soit déformable lors de l'intégration de l'outil de moulage et que la bande d'écrasement forme une délimitation claire de l'intersection entre le premier et le deuxième plastique (1, 2), **caractérisée en ce que** la bande d'écrasement (10) est disposée dans une exclusion (11) délimitée par un rebord périmètral (12) du premier plastique (1) pour la préhension du deuxième plastique (2).

11. Boîte de bouteilles selon la revendication 9 ou 10, **caractérisée en ce que** la bande d'écrasement (3, 10) présente une coupe transversale à angles droits, ou plus particulièrement de forme carrée.

12. Boîte de bouteilles selon les revendications 9 à 11, **caractérisée en ce que** la bande d'écrasement (3, 10) présente une coupe transversale qui va en se rétrécissant, en particulier dans la zone supérieure.

13. Boîte de bouteilles selon les revendications 9 à 12, **caractérisée en ce que** la bande d'écrasement (3, 10) a une hauteur entre 0,2 et 3 mm, de préférence entre 0,3 et 1,5 mm, où une hauteur située entre 0,3 et 0,8 mm est particulièrement favorisée.

14. Procédé selon la revendication 9, **caractérisé en ce que** la profondeur de la rainure (4) est de 0,2 à 0,8 mm, ou plus particulièrement de 0,4 à 0,6 mm.
